# EUROPÄISCHE PATENTANMELDUNG

(11) **EP 1 638 058 A2**
(43) Veröffentlichungstag der Anmeldung: **22.03.2006**
(21) Anmeldenummer: 05017369.9
(22) Anmeldetag: 10.08.2005
(51) Int. Cl.: G07F 7/10

(54) **Verifizierung eines Datenträgers vor der Installation eines Anwendungsprogramms**

(30) Priorität: 17.08.2004 DE 102004039828
(71) Anmelder: Giesecke & Devrient GmbH, 81677 München (DE)
(72) Erfinder: Meister, Gisela, Dr., 81737 München (DE); Hildinger, Peter, 82319 Starnberg (DE); Urmann, Jens, Dr., 80796 München (DE); Wacker, Dirk, Dr., 81371 München (DE)

(57) **Zusammenfassung**

Die Erfindung schafft ein Verfahren zum Verifizieren der Sicherheit eines Datenträgers mit einem nichtflüchtigen Speicher zum Speichern von Daten und mit einem in dem Datenträger implementierten Befehlssatz, durch den Funktionalitäten zum Verarbeiten der Daten bereitgestellt sind. Bei dem Verfahren wird unter Verwendung einer Funktionalität des Befehlssatzes verifiziert, ob vorbestimmte, für den Datenträger festgesetzte Sicherheitsanforderungen erfüllt sind. Die Verifizierung wird beispielsweise anlässlich eines Reset, anlässlich einer Verarbeitung von Daten des Datenträgers, wie z.B. Laden, Löschen oder Ändern der Daten, oder durch Aufruf eines Befehls des Befehlssatzes durchgeführt.

## Beschreibung

Die Erfindung betrifft ein Verfahren zum Verifizieren der Sicherheit eines nativen Datenträgers mit einem nichtflüchtigen Speicher zum Speichern von Daten und mit einem in dem Datenträger implementierten Befehlssatz, durch den Funktionalitäten zum Verarbeiten der Daten bereitgestellt sind. Weiter betrifft die Erfindung einen entsprechenden Datenträger, insbesondere ein Chipmodul bzw. eine Chipkarte mit einem solchen Chipmodul.

Ein Datenträger im Sinn der Erfindung ist ein Rechnersystem, bei dem die Ressourcen, d.h. Speicherressourcen und/oder Rechenkapazität (Rechenleistung) begrenzt sind, z.B. eine Chipkarte (Smart Card, Mikroprozessor-Chipkarte). Der Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben.

Der Datenträger hat in der Regel einen nichtflüchtigen Systemspeicher ROM, einen nichtflüchtigen Anwendungsspeicher EEPROM und einen flüchtigen Arbeitsspeicher RAM. Im ROM sind im Wesentlichen das Betriebssystem und Systemfunktionen abgespeichert. Im EEPROM sind im Wesentlichen Anwendungen (gleichbedeutend: Applikationen) abgespeichert. Wahlweise sind einige der Speicher durch Flash-Speicher, FRAM, etc. ersetzt.

Im Zusammenhang mit der Erfindung wird von einem nativen Datenträger ausgegangen. Unter eine nativen Datenträger wird ein Datenträger verstanden, bei dem sämtliche im Datenträger implementierten Funktionalitäten für die Datenverarbeitung in Gestalt eines Befehlssatzes (instruction set) des Betriebssystems zur Verfügung gestellt sind. Anwendungen bei einem solchen nativen Datenträger enthalten lediglich Daten, aber keinen Programmcode. Der Befehlssatz ermöglicht es dem Benutzer, die Funktionalitäten des Befehlssatzes in Verbindung mit Daten zu nutzen, so dass die Daten in Verbindung mit den benötigten Funktionalitäten des Befehlssatzes eine ausführbare Anwendung darstellen. Der Befehlssatz selbst kann auf beliebige Weise an den Datenträger bereit gestellt werden, beispielsweise als Programmcode in einer beliebigen Programmiersprache. Beispielsweise wird der Befehlssatz als Programmcode in C, C++ oder einer sonstigen geeigneten Programmiersprache bereit gestellt und in compilierter Form in den Datenträger implementiert. Alternativ wird der Befehlssatz als Programmcode in einer Interpreter-basierten Programmiersprache wie z.B. Java bereit gestellt und in interpretierter Form in den Datenträger implementiert. Insbesondere kann der Befehlssatz als Java Applet bereitgestellt werden, das in interpretierter Form in den Datenträger implementiert wird.

Unter einem Laden einer Anwendung in den Datenträger wird im Zusammenhang mit der Erfindung verstanden, dass Daten, die der geladenen Anwendung entsprechen, in den Datenträger geladen werden. Programmcode wird beim Laden einer Anwendung nicht in den Datenträger geladen.

Im Folgenden werden Details bei der Programmierung eines nativen Datenträgers im Sinn der Erfindung beschrieben.

Zuerst wird das Betriebssystem im ROM des Datenträgers implementiert. Dabei wird in der Regel bereits der vollständige gewünschte Befehlssatz des Datenträgers im Datenträger implementiert, in der Regel ebenfalls im ROM.

Nachdem das Betriebssystem mit dem Befehlssatz implementiert ist, werden ein oder mehrere Anwendungen in dem Datenträger implementiert. Eine solche Anwendung enthält Daten - ggf. einschließlich erforderlicher Zugriffsregeln zum Zugreifen auf diese Daten. Mit dem Befehlssatz sind diese Daten unter Einhaltung der Zugriffsregeln für einen Benutzer verwendbar und stellen damit eine Anwendung dar. Die Anwendungen werden in der Regel in den EEPROM implementiert. Wahlweise werden in den EEPROM zusätzlich gemeinsame Daten implementiert, die keiner Anwendung oder keiner einzelnen Anwendung zugehören, oder die für mehrere Anwendungen zugänglich sind. Beispiele für solche gemeinsamen Daten sind kryptographische Schlüssel zur Kartenauthentisierung, die nicht Anwendungsspezifisch sind, und die im Rahmen von mehreren Authentisierungs-Anwendungen genutzt werden können, um den Datenträger gegenüber der externen Welt zu authentisieren.

Das Implementieren von Daten für Anwendungen lässt sich in zwei Abschnitte gliedern. Zuerst wird der Datenträger initialisiert, wobei Daten in den Datenträger programmiert werden, die für eine Vielzahl von Datenträgern identisch sind. Anschließend wird der Datenträger personalisiert, wobei Daten einprogrammiert werden, die für einen einzelnen Datenträger oder für einige wenige Datenträger spezifisch sind. Die Programmiervorgänge zur Initialisierung und Personalisierung des Datenträgers nimmt der Hersteller oder Herausgeber des Datenträgers vor. Nach Abschluss der Personalisierung ist der Datenträger bereit zur Herausgabe an den Anwender. Die Lebensphase eines Datenträgers vor der Herausgabe an den Anwender wird häufig als Pre-Issuance-Phase bezeichnet. Die Lebensphase eines Datenträgers nach der Herausgabe an den Anwender wird dann entsprechend als Post-Issuance-Phase bezeichnet.

Für Daten im EEPROM des Datenträgers sind häufig eine Reihe von Sicherheitsanforderungen festgelegt. Die Sicherheitsanforderungen können beispielsweise Zugriffe auf Daten im EEPROM oder auf den Befehlssatz oder das Betriebssystem des Datenträgers betreffen. Als eine Sicherheitsanforderung kann vorgesehen sein, dass gewisse vorbestimmte Speicherbereiche vorbestimmten Zugriffsregeln genügen müssen. Beispielsweise kann eine Sicherheitsanforderung sein, dass für denjenigen Speicherbereich, in dem ein Signatur-Schlüssel zum Erzeugen einer digitalen Signatur abgespeichert ist oder wird, stets eine Zugriffsregel festgesetzt wird, gemäß der ein Zugriff auf diesen Speicherbereich durch einen Benutzer nur nach richtiger Eingabe einer Signatur-PIN zulässig ist. Weitere mögliche Sicherheitsanforderungen sind bei der Beschreibung der Erfindung angegeben.

Herkömmlicherweise sind Sicherheitsanforderungen in Vorschriften, Beschreibungen, Spezifikationen, Gesetzen und dergleichen festgelegt. Dass Daten, die ein Programmierer zusammenstellt und in einen Datenträger programmiert, den geltenden Sicherheitsanforderungen genügen, muss der Programmierer sicherstellen, indem er sich über geltende Sicherheitsanforderungen informiert und sorgfältig arbeitet. Versehentliche Fehler und Nachlässigkeit können daher dazu führen, dass Daten in den Datenträger gelangen, die vorbestimmten Sicherheitsanforderungen nicht genügen. Bei Datenträgern, die auch in der Post-Issuance-Phase ein Nachladen von Anwendungen erlauben, besteht zudem die Gefahr, dass die für den Datenträger geltenden Sicherheitsanforderungen nicht bekannt sind und daher von der Anwendung nicht eingehalten werden. Dabei können nachgeladene Daten selbst gegen Sicherheitsanforderungen verstoßen. Ebenso kann das Laden der Daten in den Datenträger dazu führen, dass bei anderen als den geladenen Daten Verstöße gegen die Sicherheitsanforderungen auftreten.

Der Erfindung liegt die Aufgabe zu Grunde, bei einem Datenträger mit einem nichtflüchtigen Speicher zum Speichern von Daten und mit einem in dem Datenträger implementierten Befehlssatz, durch den Funktionalitäten zum Verarbeiten der Daten bereitgestellt sind, ein effizientes Verfahren zum Verifizieren der Sicherheit des Datenträgers anzugeben. Zudem soll ein entsprechender Datenträger angegeben werden.

Die Aufgabe wird durch ein Verfahren nach Anspruch 1 gelöst. Bei dem Verfahren nach Anspruch 1 wird von einem Datenträger ausgegangen mit einem nichtflüchtigen Speicher zum Speichern von Daten und mit einem in dem Datenträger implementierten Befehlssatz, durch den Funktionalitäten zum Verarbeiten der Daten bereitgestellt sind. Verarbeiten der Daten kann beispielsweise Speichern, Kopieren, Ändern, Löschen, Rechnen mit den Daten und dergleichen und beliebige Kombinationen der im Einzelnen angeführten und weiterer Verarbeitungsmöglichkeiten umfassen. Gemäß der Erfindung wird bei dem Verfahren unter Verwendung des Befehlssatzes verifiziert, dass vorbestimmte, für den Datenträger festgesetzte Sicherheitsanforderungen erfüllt sind.

Dadurch, dass die Einhaltung der Sicherheitsanforderungen im Datenträger unter Verwendung des Befehlssatzes verifiziert wird, ist die Verifizierung der Sicherheitsanforderungen automatisiert und somit gegen menschliche Fehler abgesichert. Falls durch Daten im nichtflüchtigen Speicher Sicherheitsanforderungen verletzt werden, wird dies bei der Verifizierung bemerkt. Vor allem für Daten, die in der Post-Issuance-Phase in den Datenträger geladen werden, ist dies ein großer Vorteil. Jedoch ist die Absicherung auch bei der Personalisierung und Initialisierung des Datenträgers von Vorteil, da der Programmierer, der die Personalisierung bzw. Initialisierung vornimmt, die Möglichkeit hat, Verstöße gegen Sicherheitsanforderungen unmittelbar beim Einprogrammieren der Daten zu erkennen.

Folglich ist gemäß Anspruch 1 bei einem nativen Datenträger mit einem Befehlssatz und einem nichtflüchtigen Speicher für Daten ein effizientes Verfahren zum Verifizieren der Sicherheit des Datenträgers geschaffen.

Der Befehlssatz ist ein Befehlssatz des Betriebssystems des Datenträges. Der Datenträger ist also ein nativer Datenträger. Der Befehlssatz kann auf beliebige Weise in den Datenträger implementiert worden sein, beispielsweise wie weiter oben beschrieben, beispielsweise als compilierter Programmcode oder als interpretiertes Java-Applet.

Im nichtflüchtigen Speicher sind vorzugsweise Daten abgespeichert oder abspeicherbar, die vorzugsweise zu einer oder mehreren Anwendungen gehören und/oder von einer oder mehreren Anwendungen nutzbar sind.

Eine Anwendung kann beispielsweise eine Anwendung zum Erzeugen einer digitalen Signatur sein. Eine alternative Anwendung kann beispielsweise eine Anwendung zur Authentisierung eines Benutzers gegenüber einem an den Datenträger angekoppelten oder ankoppelbaren System sein.

Die Daten der Anwendung - oder die von der Anwendung nutzbar sind - können beispielsweise einen Schlüssel zum Erzeugen einer digitalen Signatur umfassen und/oder vorbestimmte Zugriffsregeln, ob und ggf. wie (lesend/ schreibend, mit/ohne Authentisierung) auf den Schlüssel zugegriffen werden darf, und ggf. welche Benutzer des Datenträgers auf den Schlüssel zugreifen dürfen. Die Funktionalitäten zum Erzeugen einer digitalen Signatur mit dem Schlüssel werden dagegen vom Befehlssatz des Datenträgers bereitgestellt und sind nicht Teil der Anwendung. Alternative Daten sind z.B. eine PIN (personal identification number) oder biometrische Daten eines Benutzers, um den Benutzer gegenüber einem an den Datenträger angekoppelten oder ankoppelbaren System, z.B. einem Hintergrundsystem, zu authentisieren.

Als eine Sicherheitsanforderung für Daten im nichtflüchtigen Speicher kann vorgesehen sein, dass gewisse vorbestimmte Speicherbereiche im nichtflüchtigen Speicher (z.B. EEPROM) oder in einem anderen Speicher des Datenträgers (z.B. ROM) vorbestimmten Zugriffsregeln genügen müssen.

Eine mögliche Sicherheitsanforderung betreffend den Zugriff auf Speicherbereiche ist beispielsweise, dass für denjenigen Speicherbereich, in dem ein Signatur-Schlüssel zum Erzeugen einer digitalen Signatur abgespeichert ist oder wird, stets eine Zugriffsregel festgesetzt wird, die besagt dass der Zugriff auf diesen Speicherbereich durch einen Benutzer nur nach erfolgreicher und richtiger Eingabe einer Signatur-PIN zulässig ist. Eine weitere mögliche Sicherheitsanforderung ist z.B., dass ein Schlüssel zum Erzeugen einer digitalen Signatur unter Verwendung des Schlüssels stets eine vorbestimmte Mindestlänge haben muss. Eine weitere mögliche Sicherheitsanforderung ist z.B., dass die Speichergröße von Daten einer Anwendung eine bestimmte Höchstgrenze für die Speichergröße nicht überschreiten darf.

Eine weitere mögliche Sicherheitsanforderung ist, dass pro kryptographischem Schlüssel nur ein einziger bzw. nur ein vorbestimmter Authentisierungsalgorithmus zugelassen ist, oder dass pro kryptographischem Schlüssel nur ein Authentisierungsalgorithmus einer vorbestimmten Algorithmenklasse zugelassen ist.

Weiter kann als Sicherheitsanforderung eine Mindestlänge für eine PIN, insbesondere in Abhängigkeit von den durch die PIN geschützten Daten, vorgegeben sein und/oder eine Höchstzahl von zulässigen Rücksetzvorgängen (Resets) der PIN mit einer PUK, nachdem die PIN so oft falsch eingegeben worden ist, dass die PIN gesperrt worden ist.

Eine weitere Sicherheitsanforderung kann beispielsweise umfassen, dass mit einer Signatur-PIN nur die Verwendung eines Signaturschlüssels freigegeben werden darf, hingegen keine weiteren Zugriffsmöglichkeiten autorisiert werden dürfen.

Zur Verifizierung des Datenträgers wird vorzugsweise ein Verifizierungs-Befehl aus dem Befehlssatz verwendet. Alternativ wird eine Kombination mehrerer solcher Befehle verwendet.

Gemäß einer Ausführungsform ist die Funktionalität für die Verifizierung in einen weiteren Befehl aus dem Befehlssatz eingebunden. In diesem Fall wird die Verifizierung im Zusammenhang mit der zumindest teilweisen Ausführung des weiteren Befehls durchgeführt. Beispielsweise ist der Verifizierungs-Befehl in einen weiteren Befehl eingebettet. Wenn der weitere Befehl aufgerufen wird, dann wird zwangsweise der Verifizierungs-Befehl ausgeführt.

Der weitere Befehl ist beispielsweise ein Befehl zum Aktivieren von Daten im nichtflüchtigen Speicher. In diesem Fall wird beispielsweise der Aktivierungs-Befehl aufgerufen, mit dem Daten im nichtflüchtigen Speicher aktiviert werden sollen. Der Aufruf des Aktivierungs-Befehls bewirkt, dass der Verifizierungs-Befehl auf den Datenträger angewandt wird. Mit dem Verifizierungs-Befehl wird dann verifiziert, ob der Datenträger unter Berücksichtigung der Daten im nichtflüchtigen Speicher und der Auswirkung dieser Daten auf den Datenträger insgesamt den vorbestimmten Sicherheitsanforderungen genügt. Der Aktivierungs-Befehl kann beispielsweise der Befehl ACTIVATE nach ISO/IEC 7816-9 sein.

Gemäß einer Weiterbildung der Erfindung wird, falls gemäß der Verifizierung die Sicherheitsanforderungen nicht erfüllt sind, für vorbestimmte Daten die Ausführung verhindert, wobei insbesondere die vorbestimmten Daten nicht aktiviert bleiben oder deaktiviert werden.

In Weiterbildung des vorherigen Beispiels, bei dem der Verifizierungs-Befehl in einen Aktivierungs-Befehl zum Aktivieren von Daten eingebettet ist, wird beispielsweise zuerst der Aktivierungs-Befehl für Daten im nichtflüchtigen Speicher aufgerufen. In Folge des Aufrufs des Aktivierungs-Befehls wird zwangsweise der Verifizierungs-Befehl aufgerufen und ausgeführt und dadurch die Verifizierung des Datenträgers durchgeführt. Falls gemäß der Verifizierung der Datenträger den Sicherheitsanforderungen nicht genügt, wird beispielsweise der Aktivierungs-Befehl nicht zu Ende ausgeführt, so dass die Daten nicht aktiviert werden. Falls dagegen die Verifizierung ergibt, dass der Datenträger den Sicherheitsanforderungen genügt, wird der Aktivierungs-Befehl zu Ende ausgeführt, und die Daten werden aktiviert.

Wahlweise wird die Verifizierung des Datenträgers anlässlich eines Rücksetzens, d.h. eines Reset, des Datenträgers durchgeführt, bei dem der Datenträger in einen Anfangszustand zurück versetzt wird.

Wahlweise wird die Verifizierung des Datenträgers anlässlich einer Verarbeitung von Daten im nichtflüchtigen Speicher durchgeführt. Die Verarbeitung der Daten kann beispielsweise ein Laden von Daten in den nichtflüchtigen Speicher und/oder ein Löschen von Daten aus dem nichtflüchtigen Speicher und/oder ein Ändern von Daten im nichtflüchtigen Speicher sein oder umfassen, oder eine beliebige Kombination der genannten und/oder weiterer Verarbeitungsmöglichkeiten.

Wahlweise wird die Verifizierung auf Anforderung durchgeführt. Dies kann insbesondere unter Verwendung einer Funktionalität aus dem Befehlssatz, insbesondere durch Aufruf eines Befehls aus dem Befehlssatz des Datenträgers erfolgen.

Wahlweise wird der Anwender über das Ergebnis der Verifikation informiert und/oder, falls eine Verletzung von Sicherheitsanforderungen detektiert wurde, über die Ursache(n) der Verletzung der Sicherheitsanforderungen informiert. Dies geschieht beispielsweise dadurch, dass durch den Datenträger eine Meldung mit dem Ergebnis der Verifizierung und/oder mit Informationen über Ursachen der Verletzung von Sicherheitsanforderungen ausgegeben wird.

Wahlweise wird, falls gemäß der Verifizierung die Sicherheitsanforderungen nicht erfüllt sind, für vorbestimmte Daten die Ausführung verhindert. Das Verhindern der Ausführung kann beispielsweise dadurch erzielt werden, dass die vorbestimmten Daten nicht aktiviert werden oder nicht aktiviert bleiben, oder dadurch, dass die Daten deaktiviert werden.

Wahlweise wird für die verarbeiteten Daten die Ausführung verhindert. Beispielsweise werden nachgeladene Daten, die neu in den Datenträger geladen worden sind, nicht aktiviert, wenn der Datenträger mit den nachgeladenen Daten nicht mehr den Sicherheitsanforderungen genügen würde.

Wahlweise wird für andere Daten als die verarbeiteten Daten die Ausführung verhindert, zusätzlich oder alternativ zum Verhindern der Ausführung der verarbeiteten Daten. Beispielsweise werden, wenn auf Grund von nachgeladenen Daten Sicherheitsanforderungen des Datenträgers verletzt werden, sowohl die nachgeladenen Daten nicht aktiviert als auch bereits vorhandene, ursprünglich aktivierte Daten deaktiviert. Für den Fall, dass Daten geändert werden, beispielsweise, indem vorhandene Daten durch nachgeladene Daten überschrieben werden, gilt Analoges. Analog werden beispielsweise, falls Daten im nichtflüchtigen Speicher gelöscht werden, und falls in Folge des Löschens der Datenträger seinen vorbestimmten Sicherheitsanforderungen nicht mehr genügt, besonders sicherheitsrelevante Daten, die noch im nichtflüchtigen Speicher verblieben sind, deaktiviert. Alternativ oder zusätzlich werden, wenn Daten gelöscht werden, solche verbliebenen Daten gesperrt, bei denen eine Verletzung von Sicherheitsanforderungen auftritt.

Wahlweise erfolgt die Verifizierung der Sicherheitsanforderungen nur anlässlich einer solchen Verarbeitung der Daten, die eine Änderung der Daten im nichtflüchtigen Speicher des Datenträgers beinhaltet oder ist. Eine Verarbeitung der Daten, durch die die Daten im Datenträger nicht geändert werden, hat in der Regel auch keinen Einfluss auf die Einhaltung der Sicherheitsanforderungen. Daher kann die Verifizierung des Datenträgers für Verarbeitungen, bei denen die Daten im Datenträger nicht verändert werden, in der Regel entfallen. Das Verfahren, bei dem nur durch Verarbeitungen mit Veränderung eine Verifizierung des Datenträgers veranlasst wird, ist besonders effizient. Alternativ wird die Verifizierung bei jeder Verarbeitung von Daten durchgeführt, wobei keine Unterscheidung nach Art der Verarbeitung erforderlich ist, so dass das Verfahren einfacher ist.

Wahlweise ist zumindest ein Teil der Sicherheitsanforderungen im Datenträger abgespeichert. Die Sicherheitsanforderungen oder ein Teil davon wird beispielsweise bereits bei der Initialisierung oder Personalisierung im Datenträger implementiert, oder teils bei der Initialisierung, teils bei der Personalisierung.

Wahlweise werden die Sicherheitsanforderungen oder zumindest ein Teil davon außerhalb des Datenträgers bereitgestellt.

Wahlweise werden die Sicherheitsanforderungen anlässlich einer gewünschten Verarbeitung von Daten an den Datenträger bereitgestellt.

Beispielsweise werden, wenn Daten im Datenträger verarbeitet (z.B. nachgeladen, geändert bzw. gelöscht) werden sollen, vor der Verarbeitung der Daten die Sicherheitsanforderungen in den Datenträger importiert (geladen) oder bereits vorhandene Sicherheitsanforderungen ergänzt oder teilweise oder ganz ersetzt.

Alternativ werden die Sicherheitsanforderungen an einem Speicherort außerhalb des Datenträgers bereitgestellt gehalten und für die Verifizierung eine Datenverbindung zwischen dem Speicherort der Sicherheitsanforderungen und dem Datenträger eingerichtet und/oder aufrecht erhalten. Die Verifizierung des Datenträgers wird in diesem Fall wahlweise außerhalb des Datenträgers durchgeführt.

Wahlweise werden die Sicherheitsanforderungen (oder ein Teil davon) durch den Datenträger von außerhalb des Datenträgers angefordert. Beispielsweise fordert der Datenträger, bevor der Datenträger verifiziert werden kann und/oder bevor Daten verarbeitet werden können, dass zuerst Sicherheitsanforderungen oder Teile von Sicherheitsanforderungen (z.B. Ergänzungen, Aktualisierungen) an den Datenträger bereitgestellt werden. Die Sicherheitsanforderungen werden daraufhin wie oben beschrieben an den Datenträger bereitgestellt.

Wahlweise sind die geladenen Sicherheitsanforderungen signiert.

Sicherheitsanforderungen, die erst anlässlich einer gewünschten Verifizierung an den Datenträger bereit gestellt werden, können beispielsweise vom Kartenherausgeber oder Kartenhersteller oder einer sonstigen autorisierten Stelle an den Datenträger übermittelt werden. Wahlweise fordert der Datenträger anlässlich eines Versuchs, den Datenträger zu verifizieren bzw. Daten im Datenträger zu manipulieren, den Benutzer auf, signierte Sicherheitsanforderungen von einer autorisierten Stelle anzufordern und in den Datenträger zu laden. Erst dann wird der Datenträger verifiziert bzw. die gewünschte Verarbeitung der Daten ermöglicht und in Folge der Verarbeitung der Datenträger verifiziert. Die Sicherheitsanforderungen können ausgehend von der autorisierten Stelle wahlweise temporär oder dauerhaft in den Datenträger geladen werden. Wahlweise werden die Sicherheitsanforderungen nur so lange an den Datenträger bereitgestellt, wie eine Datenverbindung zwischen der autorisierten Stelle und dem Datenträger besteht.

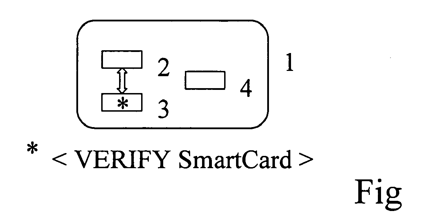

Die einzige Figur der Zeichnung zeigt, gemäß einer Ausführungsform der Erfindung, eine schematische Darstellung einer Chipkarte 1 mit einem darin implementierten Befehlssatz 3, mit einem nichtflüchtigen Speicher 2 für Daten, insbesondere Daten von Anwendungen, und mit einem Satz von vorbestimmten, ebenfalls in der Chipkarte abgelegten Sicherheitsanforderungen 4. Der Befehlssatz 3 enthält einen Befehl "VERIFY SmartCard", mit dem sich der Datenträger auf Einhaltung der Sicherheitsanforderungen 4 verifizieren lässt. Im nichtflüchtigen Speicher 2 ist eine Anwendung zum Erzeugen einer digitalen Signatur abgespeichert, die in diesem Beispiel unter Anderem die folgenden Daten aufweist: einen Signatur-Schlüssel zum Erzeugen einer digitalen Signatur, eine Zugriffsregel zum Zugriff auf den Signatur-Schlüssel, eine Signatur-PIN und eine Zugriffsregel zum Zugriff auf die Signatur-PIN. In den Sicherheitsanforderungen 4 sind mehrere Sicherheitsbedingungen abgespeichert. Eine erste Sicherheitsanforderung besagt, dass ein Signatur-Schlüssel eine Länge von mindestens 1024 Bit haben muss. Eine zweite Sicherheitsanforderung besagt, dass für einen Zugriff auf den Signatur-Schlüssel stets die Eingabe einer Signatur-PIN erforderlich ist. Eine dritte Sicherheitsanforderung besagt, dass ein direkter Zugriff durch einen Benutzer auf die Signatur-PIN niemals zulässig sein darf. Sobald der Befehl "VERIFY SmartCard" aufgerufen wird, wird im Datenträger überprüft: die Länge des Signatur-Schlüssels und ob diese mindestens 1024 Bit beträgt, die Zugriffsbedingung für den Signatur-Schlüssel und ob diese Zugriffsbedingung auf "Eingabe der Signatur-PIN erforderlich" eingestellt ist, sowie die Zugriffsbedingung für die Signatur-PIN und ob der direkte Zugriff eines Benutzers auf die Signatur-PIN auf "niemals erlaubt" eingestellt ist. Falls mindestens eine der Sicherheitsanforderungen verletzt ist, wird in der Chipkarte 1 die Anwendung zum Erzeugen einer digitalen Signatur gesperrt. Der Befehl "VERIFY SmartCard" wird bei jedem Reset der Chipkarte und bei jeder Verarbeitung von Daten in der Chipkarte aufgerufen. Wahlweise lässt sich der Befehl "VERIFY SmartCard" auch auf Anforderung des Benutzers der Chipkarte aufrufen.

Im Folgenden werden Beispiele für Ausführungsformen der Erfindung angeführt.

Eine Verarbeitung von Daten kann beispielsweise darin bestehen, dass ein Teil einer Anwendung in den Datenträger nachgeladen wird. Beispielsweise wird in eine Anwendung zur Authentisierung eines Benutzers, die bislang mit PIN-Eingabe arbeitet, ein Datensatz für eine Authentisierung mit biometrischen Fingerabdruckdaten nachgeladen. Beispielsweise sei im Datenträger eine Anwendung zum Authentisieren eines Benutzers abgespeichert. Die Daten der Anwendung enthalten eine Zugriffsregel für die Authentisierung, die eine Authentisierung durch PIN-Eingabe fordert, und eine gesichert abgespeicherte PIN für die Authentisierung. Die Verarbeitung der Daten umfasst die folgenden Maßnahmen: zum einen wird die Zugriffsregel geändert, so dass für die Authentisierung die Eingabe von biometrischen Daten eines Fingerabdrucks erforderlich ist; zum anderen werden biometrische Referenzdaten für die Authentisierung mit biometrischen Daten in den Datenträger geladen. Durch die Verarbeitung der Daten kann es beispielsweise passieren, dass der Zugriff auf den Speicherplatz, an dem die PIN abgespeichert ist, verbotenerweise zulässig wird, so dass die Sicherheitsanforderungen des Datenträgers verletzt werden. Beim Ausführen des Befehls "VERIFY SmartCard" im Anschluss an die Verarbeitung der Daten wird die Verletzung der Sicherheitsanforderungen bemerkt. Folglich wird der Teil der Authentisierungs-Anwendung, der die Authentisierung mit PIN-Eingabe betrifft, für die künftige Ausführung gesperrt. Wahlweise müssen, bevor die Daten für die biometrische Authentisierung nachgeladen werden können, weitere Sicherheitsanforderungen in den Datenträger geladen werden (oder anderweitig an den Datenträger bereitgestellt werden).

## Patentansprüche

1. Verfahren zum Verifizieren der Sicherheit eines Datenträgers (1) mit einem nichtflüchtigen Speicher (2) zum Speichern von Daten und mit einem in dem Datenträger implementierten Befehlssatz (3), durch den Funktionalitäten zum Verarbeiten der Daten bereitgestellt sind, wobei bei dem Verfahren unter Verwendung einer Funktionalität des Befehlssatzes (3) verifiziert wird, ob vorbestimmte, für den Datenträger (1) festgesetzte Sicherheitsanforderungen erfüllt sind.

2. Verfahren nach Anspruch 1, wobei die Daten Daten zu mindestens einer Anwendung aufweisen.

3. Verfahren nach Anspruch 1 oder 2, wobei zur Verifizierung ein Verifizierungs-Befehl (VERIFY) aus dem Befehlssatz (3) verwendet wird.

4. Verfahren nach einem der Ansprüche 1 bis 3, wobei die Funktionalität für die Verifizierung in einen weiteren Befehl aus dem Befehlssatz (3) eingebunden ist und die Verifizierung im Zusammenhang mit der zumindest teilweisen Ausführung des weiteren Befehls durchgeführt wird.

5. Verfahren nach Anspruch 4, wobei der weitere Befehl ein Befehl (ACTIVATE) zum Aktivieren von Daten im nichtflüchtigen Speicher ist.

6. Verfahren nach einem der Ansprüche 1 bis 5, wobei, falls gemäß der Verifizierung die Sicherheitsanforderungen zumindest teilweise nicht erfüllt sind, für vorbestimmte Daten die Ausführung verhindert wird, insbesondere die vorbestimmten Daten deaktiviert werden oder nicht-aktiviert bleiben.

7. Verfahren nach einem der Ansprüche 1 bis 6, wobei die Verifizierung des Datenträgers anlässlich eines Rücksetzens (RESET) des Datenträgers durchgeführt wird.

8. Verfahren nach einem der Ansprüche 1 bis 7, wobei die Verifizierung des Datenträgers anlässlich einer Verarbeitung von Daten im nichtflüchtigen Speicher (2), insbesondere anlässlich eines Ladens von Daten in den nichtflüchtigen Speicher (2) und/oder eines Löschens von Daten aus dem nichtflüchtigen Speicher und/oder eines Änderns von Daten im nichtflüchtigen Speicher (2), durchgeführt wird.

9. Verfahren nach Anspruch 8, wobei, falls gemäß der Verifizierung die Sicherheitsanforderungen zumindest teilweise nicht erfüllt sind, für vorbestimmte Daten die Ausführung verhindert wird, insbesondere die vorbestimmten Daten deaktiviert werden oder nicht-aktiviert bleiben.

10. Verfahren nach Anspruch 9, wobei für die verarbeiteten Daten die Ausführung verhindert wird.

11. Verfahren nach Anspruch 9 oder 10, wobei für andere Daten als die verarbeiteten Daten die Ausführung verhindert wird.

12. Verfahren nach einem der Ansprüche 8 bis 11, wobei die Verifizierung der Sicherheitsanforderungen nur anlässlich einer Verarbeitung der Daten erfolgt, die eine Änderung der Daten im nichtflüchtigen Speicher des Datenträgers beinhaltet oder ist.

13. Verfahren nach einem der Ansprüche 1 bis 12, wobei die Verifizierung auf Anforderung durchgeführt wird, insbesondere durch Aufruf eines Befehls aus dem Befehlssatz (3) des Datenträgers.

14. Verfahren nach einem der Ansprüche 1 bis 13, wobei weiter eine Meldung mit dem Ergebnis der Verifizierung und/oder mit Informationen über Ursachen der Verletzung von Sicherheitsanforderungen ausgegeben wird.

15. Verfahren nach einem der Ansprüche 1 bis 14, wobei zumindest ein Teil der Sicherheitsanforderungen (4) im Datenträger (1) abgespeichert ist.

16. Verfahren nach einem der Ansprüche 1 bis 15, wobei zumindest ein Teil der Sicherheitsanforderungen für die Verifizierung außerhalb des Datenträgers (1) bereitgestellt wird.

17. Verfahren nach einem der Ansprüche 1 bis 16, wobei zumindest ein Teil der Sicherheitsanforderungen durch den Datenträger (1) von außerhalb des Datenträgers (1) angefordert wird.

18. Datenträger (1) mit einem nichtflüchtigen Speicher (2) zum Speichern von Daten und mit einem in dem Datenträger implementierten Befehlssatz (3), durch den Funktionalitäten zum Verarbeiten der Daten bereitgestellt sind, wobei für den Datenträger (1) Sicherheitsanforderungen festgesetzt sind, die erfüllt sein müssen, und wobei der Befehlssatz (3) eine Funktionalität umfasst, mit der die Erfüllung der Sicherheitsanforderungen verifizierbar ist.

19. Datenträger nach Anspruch 18, in dem weiter ein Verfahren nach einem der vorangehenden Verfahrensansprüche 1 bis 17 implementiert ist.
